# EUROPÄISCHE PATENTSCHRIFT

(11) **EP 0 591 704 B1**
(45) Veröffentlichungstag und Bekanntmachung des Hinweises auf die Patenterteilung: **20.05.1998**
(21) Anmeldenummer: 93114617.9
(22) Anmeldetag: 11.09.1993
(51) Int. Cl.: G08C 17/00, G08C 19/00

(54) **Verfahren zur hochfrequenten Übertragung von Messsignalen, insbesondere Temperatursignalen**
Method for the high-frequency transfer of measuring signals, particularly of temperature signals
Procédé pour le transfert à haute fréquence des signaux de mesure, particulièrement des signaux de température

(30) Priorität: 25.09.1992 DE 4232127
(43) Veröffentlichungstag der Anmeldung: 13.04.1994
(73) Patentinhaber: Diehl Stiftung & Co., 90478 Nürnberg (DE)
(72) Erfinder: Stürzl, Wilhelm, D-90610 Winkelhaid (DE); Grundl, Peter, D-91054 Erlangen (DE)

(56) Entgegenhaltungen:
- CH-A- 676 398
- DE-A- 3 119 119
- US-A- 4 839 645

## Beschreibung

Die Erfindung betrifft ein Verfahren zur drahtlosen, hochfrequenten Übertragung von Meßwertsignalen, insbesondere Temperatursignalen, mittels wenigstens eines batteriegespeisten Senders, der das Sendesignal senderspezifisch kodiert, auf einen Empfänger, der an eine Steuereinrichtung, insbesondere eine Heizungssteuerung angeschlossen ist.

Aus der US-PS 4 433 719 ergibt sich ein derartiges Verfahren. Dort ist ein Thermostat mit einem batteriebetriebenen Sender vorgeschlagen, der ein Hochfrequenzsignal drahtlos an eine Heizungseinrichtung übermittelt. Das Sendesignal enthält den Schaltzustand eines temperaturabhängigen Schalters und ein dem jeweiligen Sender spezifisches Adreßsignal. Eine der Temperatur proportionale Signalübertragung ist nicht vorgesehen. Zur Energieersparnis ist der Sender von einem Zeitgeber gesteuert, der das Sendesignal nur selten senden läßt.

In der GB 2 180 963 A ist eine drahtlose Temperatursteuereinrichtung für eine Heizungsanlage beschrieben, die eine batteriegespeiste Sendeeinheit mit einem Temperaturfühler, einen A/D-Wandler und einen Mikroprozessor aufweist. Das digitalisierte Temperatursignal wird mit Licht- oder Schallwellen moduliert und einem entsprechenden Empfänger der Heizungsanlage übermittelt. Auch hier ist der Energieverbrauch der Batterie der Sendeeinheit durch ein seltenes Aussenden des Temperatursignals geringgehalten.

In der GB 2 051 421 A ist ein Raumtemperatur-Regelsystem beschrieben, bei dem ein batteriegespeister Sender die Raumtemperatur erfaßt und hochfrequent, drahtlos einer Heizungssteuerung übermittelt.

Nach dem Stand der Technik der digitalen Datenübertragung werden Datentelegramme in einem festen zeitlichen Rahmen übertragen. Der Sender muß wenigstens während der gesamten Dauer des Datentelegramms in Betrieb sein. Er verbraucht also auch Strom, wenn das Datentelegramm keine im jeweiligen Fall nötigen Informationen enthält.

Aufgabe der Erfindung ist es, ein Verfahren der eingangs genannten Art vorzuschlagen, mit dem ein dem Meßwert proportionales Signal zu übertragen ist und eine Reduzierung des Energieverbrauchs der Batterie nicht nur durch ein vergleichsweise seltenes Senden des Meßsignals erreicht ist.

Erfindungsgemäß ist obige Aufgabe bei einem Verfahren der eingangs genannten Art dadurch gelöst, daß das Sendesignal als digitales Datentelegramm übertragen wird, das
a) digitale Adreßdaten zur Adressierung des Empfängers,
b) weitere digitale Adreßdaten, die dem jeweiligen Sender zugeordnet sind, und
c) Meßwertdaten in Form von Digits, die dem Meßwertsignal entsprechen, umfaßt,
daß die Anzahl der Digits je nach der nötigen Auflösung des jeweiligen Meßwertsignals größer oder kleiner und möglichst klein gewählt wird, daß nach dem jeweils letzten Digit ein Synchronisiersignal gesendet wird und daß von dem Empfänger, wenn er das Synchronisiersignal empfängt, das empfangene Datentelegramm ausgewertet wird.

Dadurch ist der Batterieverbrauch reduziert, da jeder Sender in seinem Datentelegramm nur so viele Digits enthält, wie für das zu sendende Meßsignal nötig. Das Datentelegramm ist also in seiner Länge variabel und es verbleiben in ihm keine "leeren" Digits, die zwar Sendeenergie beanspruchen würden, jedoch keine notwendige Information enthielten.

Das jeweils nach dem letzten nötigen Digit auftretende Synchronisiersignal löst beim Empfänger die Auswertung des empfangenen Datentelegramms aus.

Vorteilhafte Ausgestaltungen der Erfindung ergeben sich aus den Unteransprüchen und der folgenden Beschreibung eines Ausführungsbeispiels. In der Zeichnung zeigen:
Figur 1 ein Blockschaltbild einer ortsungebundenen Sendeeinheit,
Figur 2 ein Blockschaltbild eines Empfängers und
Figur 3 den Aufbau eines variablen Datentelegrammes.

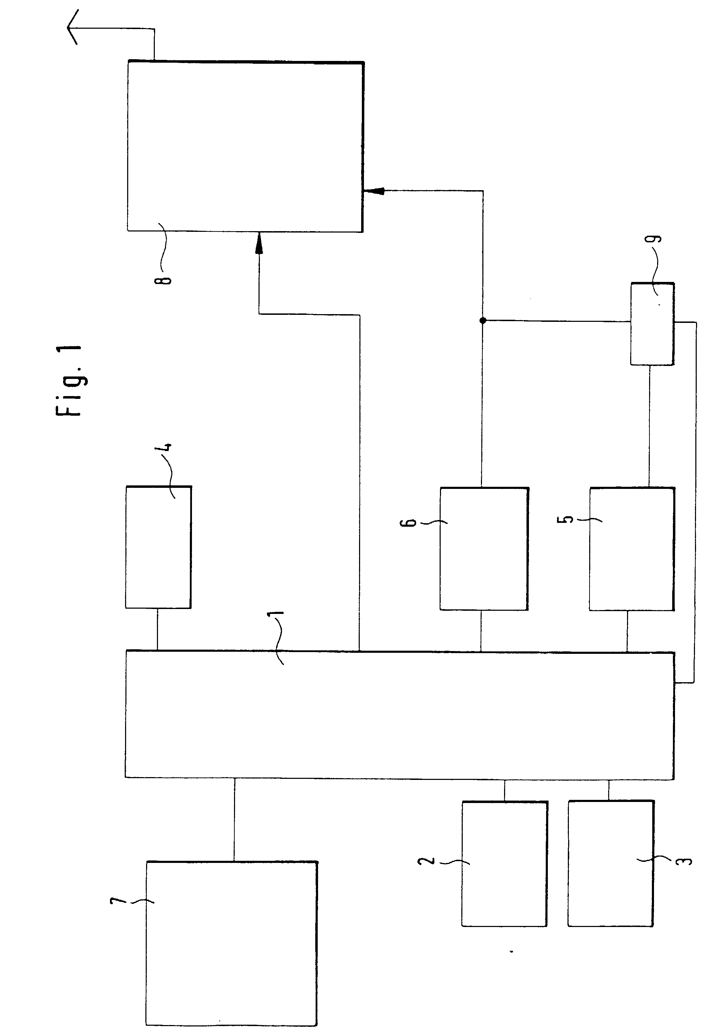

Eine leitungsungebundene Sendeeinheit (vgl. Fig. 1) weist einen Mikroprozessor mit einer zentralen Prozessoreinheit (1), einem ROM-Speicher(2), einem RAM-Speicher(3) und einer Resetschaltung(4) auf. An die Prozessoreinheit(1) ist eine Temperaturerfassungseinrichtung(5) angeschlossen, die den Istwert der Temperatur des Raumes erfaßt, in dem die Sendeeinheit (vgl. Fig. 1) angebracht ist, und diesen Temperaturwert als Zahlenwert auf den Prozessor(1) überträgt.

Außerdem ist an dem Prozessor(1) ein Sollwertgeber(6) angeschlossen, der die Solltemperatur als Zahlenwert auf den Prozessor(1) überträgt.

Am Prozessor(1) liegt auch ein Uhrzeitgeber(7). Mit diesem ist im Zusammenwirken mit dem Sollwertgeber(6) die Solltemperatur des Raumes uhrzeitabhängig einstellbar, was beispielsweise die Möglichkeit einer nächtlichen Absenkung der Solltemperatur gibt.

Die Sendeeinheit (vgl. Fig. 1) weist einen Hochfrequenzsender(8) auf. Dieser erhält von dem Prozessor(1) Datentelegramme, die er hochfrequenzmoduliert aussendet.

Die Sendeeinheit (vgl. Fig. 1) ist von einer Batterie(9) gespeist. Sie ist damit unabhängig von einem Netzanschluß. Die Sendeeinheit läßt sich einfach an einer Stelle oder an einer anderen Stelle eines Wohnraumes oder einem anderen Raum anordnen.

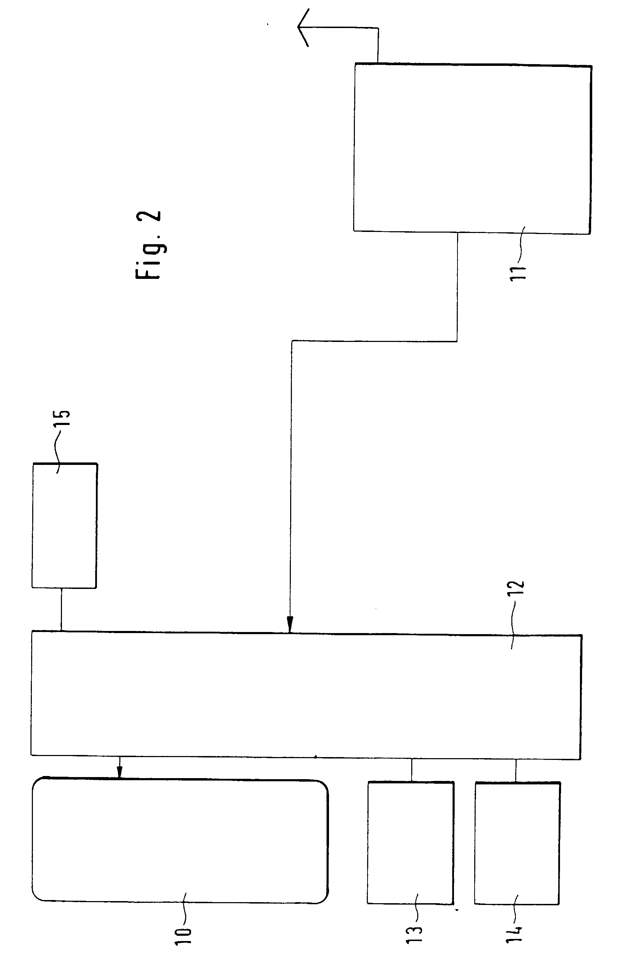

Die Sendeeinheit ist einer Empfangseinheit (vgl. Fig. 2) zugeordnet, die an eine Steuereinrichtung(10) einer Heizungsanlage angeschlossen ist, mit welcher der Raum beheizbar ist, in dem die Sendeeinheit (vgl. Fig. 1) angeordnet ist. Die Steuereinrichtung(10) befindet sich in einem von dem Raum der Sendeeinheit entfernten Gebäuderaum.

Die Empfangseinheit weist einen Empfänger(11) auf, der die hochfrequenzmodulierten digitalen Datentelegramme des Senders(8) empfängt und sie demoduliert an einen Prozessor(12) gibt, welcher an die Steuereinrichtung(10) angeschlossen ist. An dem Prozessor(12) sind ein ROM-Speicher(13) und ein RAM-Speicher(14) sowie eine Resetschaltung(15) angeschlossen. Die Steuereinrichtung(10) wird dadurch von der Sendeeinheit (vgl. Fig. 1) ferngesteuert.

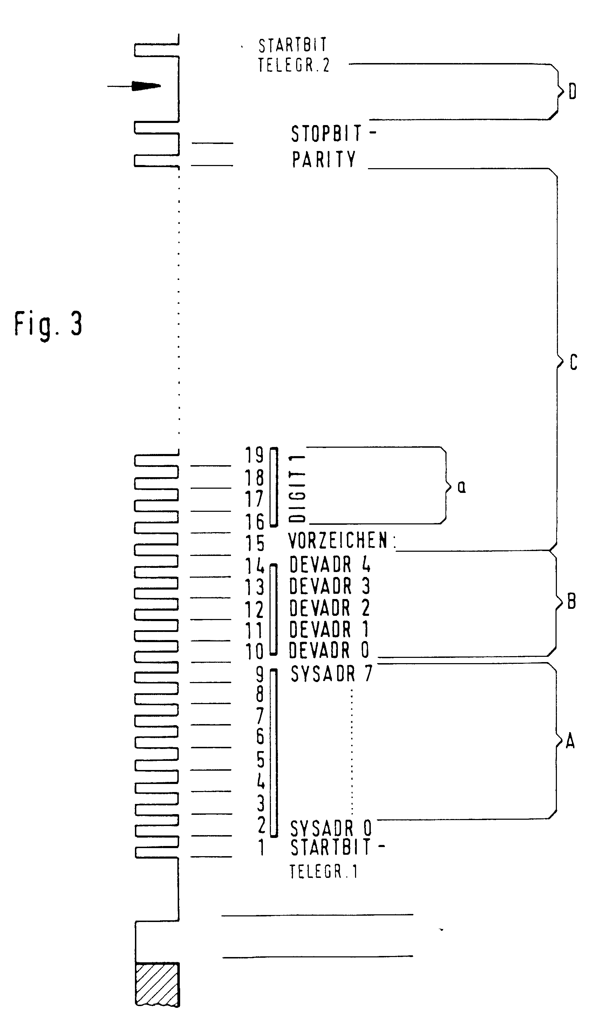

Der Aufbau eines der Datentelegramme, die der Sender(8) hochfrequenzmoduliert sendet, ist in Figur 3 gezeigt. Zur Erhöhung der Übertragungssicherheit werden in jedem Übertragungszyklus zwei oder drei oder mehrere solcher Datentelegramme übermittelt. Zwischen der Übertragung der Datentelegramme kann in an sich bekannter Weise zur Reduzierung des Verbrauchs der Batterie(9) eine lange übertragungsfreie Zeit bestehen.

Das vom Sender(8) hochfrequenzmoduliert gesendete digitale Datentelegramm weist ein Startbit 1 (Fig. 3) mit H auf. Diesem folgt eine Empfängeradressierung A aus beispielsweise acht Bits. Durch die Empfängeradressierung A ist festgelegt, auf welchen Sender die Steuereinrichtung(10) ansprechen soll ,da sich in dem Gebäude auch Empfänger befinden können, die durch diesen Sender nicht angesprochen werden sollen. Dies ist beispielsweise der Fall, wenn im gleichen Gebäude mehrere in der beschriebenen Weise gesteuerte Heizungsanlagen vorgesehen sind.

Der Empfängeradressierung A folgt eine senderspezifische Adressierung B mit beispielsweise fünf Bits. Es können damit der Heizungsanlage fünf Sendeeinheiten zugeordnet werden, deren Sendesignale von der Steuereinrichtung(10) auswertbar sind.

Der senderspezifischen Adressierung B folgt ein Bit, das einem Vorzeichen, + oder -, des nachfolgenden Datenworts C zugeordnet ist.

Das Datenwort C besteht aus wenigstens einem Digit a aus vier Bits 16,17,18,19. Das Datenwort C enthält die vom Prozessor(1) über den Sender(8) und den Empfänger(11) auf den Prozessor(12) zu übertragende Meßwertsignalinformation. Das Datenwort C ist je nach der Auflösung bzw. Länge der zu übertragenden Information möglichst kurz. Ist beispielsweise eine Information +174 entsprechend +17,4°C zu übertragen, dann werden außer dem Vorzeichen Bit 15 drei Digits benötigt. Ist gegenüber dieser dezimalen dreistelligen Übertragung nur eine dezimal einstellige Übertragung erforderlich, dann genügt zur Übertragung ein Digit.

Das Datenwort ist also in seiner Länge veränderlich. Das Datentelegramm ist nicht länger als notwendig. Der Sender ist also bei kurzen nötigen Datenworten weniger lang in Betrieb als bei längeren nötigen Datenwortlängen.

Dem Datenwort C folgt ein Parity-Bit und ein Stop-Bit L. Diesem schließt sich ein Synchronisiersignal D an, das beispielsweise von einer vergleichsweise langen Pause (vgl. Fig. 3) gebildet sein kann. Das Synchronisiersignal kann auch auf andere Weise, beispielsweise durch ein Signal mit einer anderen Modulationsfrequenz gebildet sein.

Dem Synchronisiersignal D folgt dann wieder in der zyklischen Übertragung des Datentelegramms das Startbit des nächsten Datentelegramms.

An die Temperaturerfassungseinrichtung(5) können ein Temperaturfühler für die Innentemperatur und ein weiterer Temperaturfühler für die Außentemperatur angeschlossen sein. Das Datenwort C enthält dann jeweils zusammen die beiden Temperaturwerte.

Wegen der verzögerten Auswirkung einer Änderung der Außentemperatur auf die Innentemperatur ist es nicht nötig bei jeder Übertragung der Innentemperatur auch die Außentemperatur zu übertragen. Beispielsweise kann es genügen die Außentemperatur nur bei jeder 10.Übertragung der Innentemperatur mit zu übertragen. In diesem Fall wird also neunmal ein kurzes Datenwort und einmal ein langes Datenwort übertragen. Dadurch ist die Batterielebensdauer erhöht.

Es ist also die Länge der zu übertragenden Datenworte an die Anzahl der zu übertragenden Werte und deren Länge angepaßt, so daß keine unnötig langen Datenworte übertragen werden.

Der Sender(8) soll zur Reduzierung des Batterieverbrauchs nur dann in Betrieb sein, wenn dies zur Datenübertragung erforderlich ist. Der Temperatur-Sollwert muß nur dann gesendet werden, wenn seine Einstellung geändert wurde. Der Temperatur-Istwert muß nur dann gesendet werden, wenn sich die Isttemperatur um einen bestimmten Betrag geändert hat. Es ist dabei möglich die Werte in je einem eigenen Datentelegramm nacheinander bzw. bei Anfall zu senden. Es ist jedoch auch möglich, wie oben beschrieben, den Sollwert mit dem Istwert in einem einzigen Datenwort C zu übertragen.

Sind in der Anlage räumlich getrennte Sendeeinheiten vorgesehen, ist es an sich nicht ausgeschlossen, daß gleichzeitig zwei Datentelegramme am Empfänger auftreten können, die dieser dann nicht auswerten kann. Um das gleichzeitige Senden zu vermeiden, kann eine Zeitsynchronisation in der Weise vorgesehen sein, daß jede Sendeeinheit nur in einem ihr zugeordneten Zeitfenster sendet. Einfacher ist jedoch das nichtsynchronisierte Senden in zufälligen Abständen. Da die Sender ohnehin zur Reduzierung des Batterieverbrauchs nur selten und möglichst kurze Datenworte senden, treten die Datentelegramme mit hoher Wahrscheinlichkeit zu unterschiedlichen Zeitpunkten am Empfänger auf.

Sind mehrere Sendeeinheiten in einem gemeinsamen Gehäuse untergebracht, dann ist die genannte Zeitsynchronisation einfach zu verwirklichen.

## Patentansprüche

1. Verfahren zur drahtlosen, hochfrequenten Übertragung von Meßwertsignalen, insbesondere Temperatursignalen, mittels wenigstens eines batteriegespeisten Senders, der das Sendesignal senderspezifisch kodiert, auf einen Empfänger, der an eine Steuereinrichtung, insbesondere eine Heizungssteuerung, angeschlossen ist,
dadurch gekennzeichnet,
daß das Sendesignal als digitales Datentelegramm übertragen wird, das
a) digitale Adreßdaten zur Adressierung des Empfängers,
b) weitere digitale Adreßdaten, die dem jeweiligen Sender zugeordnet sind, und
c) Meßwertdaten in Form von Digits, die den Meßwertsignalen entsprechen, umfaßt,
daß die Anzahl der Digits je nach der nötigen Auflösung des jeweiligen Meßsignals größer oder kleiner und möglichst klein gewählt wird, daß nach dem jeweils letzten Digit ein Synchronisiersignal gesendet wird und daß vom Empfänger, wenn er das Synchronisiersignal empfängt, das empfangene Datentelegramm ausgewertet wird.

2. Verfahren nach Anspruch 1,
dadurch gekennzeichnet,
daß das Datentelegramm und das Synchronisiersignal mehrmals aufeinanderfolgend gesendet werden.

3. Verfahren nach Anspruch 1,
dadurch gekennzeichnet,
daß das Synchronisiersignal eine Pause zwischen Datentelegrammen ist.

4. Verfahren nach einem der vorhergehenden Ansprüche,
dadurch gekennzeichnet,
daß die Meßwertdaten eines Datentelegramms zwei oder mehrere Meßwerte, wie beispielsweise die Isttemperatur, die Außentemperatur und/oder den Sollwert, enthalten.

5. Verfahren nach einem der vorhergehenden Ansprüche,
dadurch gekennzeichnet,
daß die Meßwerte und/oder der Sollwert nur bei Änderungen gesendet werden.

## Claims

1. Method for the radio, high-frequency transmission of measured-value signals, particularly temperature signals, by means of at least one battery-operated transmitter which codes the transmitted signal specifically to the transmitter, to a receiver which is connected to a control device, particularly a heating control,
characterized in that
the transmitted signal is transmitted as digital data telegram, which comprises
a) digital address data for addressing the receiver,
b) further digital address data which are assigned to the respective transmitter, and
c) measured-value data in the Form of digits which correspond with the measured-value signals,
in that the number of digits is larger or smaller and as small as possible according to the necessary resolution of the respective measured-value signal, in that a synchronizing signal is transmitted in each case after the last digit and
in that the received data telegram is evaluated by the receiver when it receives the synchronizing signal.

2. Method according to Claim 1,
characterized in that
the data telegram and the synchronizing signal are transmitted several times successively.

3. Method according to Claim 1,
characterized in that
the synchronizing signal is a pause between data telegrams.

4. Method according to one of the preceding claims,
characterized in that
the measured-value data of a data telegram comprise two or more measured values, such as for instance the actual temperature, the outside temperature and/or the desired value.

5. Method according to one of the preceding claims,
characterized in that
the measured values and/or the desired value are only transmitted in the case of variations.

## Revendications

1. Procédé de transmission à haute fréquence sans fil de signaux de valeur de mesure en particulier de signaux de température, au moyen d'au moins un émetteur alimenté par batterie, qui code de façon spécifique à l'émetteur le signal d'émission, sur un récepteur raccordé à un dispositif de commande, en particulier une commande de chauffage, caractérisé en ce que le signal d'émission est transmis sous forme de télégramme de données numériques, comprenant :
a) des données d'adresse numériques destinées à adresser le récepteur,
b) d'autres données d'adresse numériques associées à l'émetteur respectif, et
c) des données de valeur de mesure se présentant sous la forme de valeurs numériques correspondants aux signaux de valeurs de mesure,
en ce que le nombre des valeurs numériques est plus grand ou plus petit, selon la résolution nécessaire du signal de mesure respectif, et est choisi aussi petit que possible, en ce qu'après chaque fois la dernière valeur numérique est émis un signal de synchronisation et en ce que le télégramme de données reçu est évalué par le récepteur lorsqu'il reçoit le signal de synchronisation.

2. Procédé selon la revendication 1, caractérisé en ce que le télégramme de données et le signal de synchronisation sont émis à plusieurs reprises successivement.

3. Procédé selon la revendication 1, caractérisé en ce que le signal de synchronisation est constitué par une pause placée entre les télégrammes de données.

4. Procédé selon l'une des revendications précédentes, caractérisé en ce que les données de valeur de mesure d'un télégramme de données contiennent deux valeurs de mesure ou plus, telles que, par exemple, la température réelle, la température extérieure et/ou la valeur de consigne.

5. Procédé selon l'une des revendications précédentes, caractérisé en ce que les valeurs de mesure et/ou la valeur de consigne ne sont émises que dans le cas où se manifestent des changements.
